# FASCICULE DE BREVET EUROPEEN

(11) **EP 1 088 164 B1**
(45) Date de publication et mention de la délivrance du brevet: **19.03.2003**
(21) Numéro de dépôt: 99920876.2
(22) Date de dépôt: 14.05.1999
(51) Int. Cl.: F04B 17/04, G01F 1/075

(54) **MOTOPOMPE A ECOULEMENT AXIAL TRAVERSANT AVEC DEBITMETRE INCORPORE ET PRESSOSTAT**
MOTORPUMPE MIT AXIALER DURCHSTRÖMUNG, MIT INTEGRIERTEM DURCHFLUSSMESSER UND DRUCKSCHALTER
MOTOR PUMP WITH AXIAL THROUGH FLOW COMPRISING AN INCORPORATED FLOWMETER AND PRESSURE CONTROLLER

(30) Priorité: 15.05.1998 FR 9806431; 15.05.1998 FR 9810989
(43) Date de publication de la demande: 04.04.2001
(73) Titulaire: Versini, Rolland, 13390 Auriol (FR)
(72) Inventeur: Versini, Rolland, 13390 Auriol (FR)
(74) Mandataire: Roman, Michel
(86) Numéro de dépôt international: FR9901158
(87) Numéro de publication internationale: WO99060270

(56) Documents cités:
- WO-A-95/26461
- CH-A- 675 312
- DE-C- 4 437 670
- FR-A- 2 428 827
- US-A- 4 160 380

## Description

La présente invention a pour objet une motopompe à écoulement axial traversant avec débitmètre incorporé et pressostat.

Elle est destinée en particulier à équiper des machines à café automatiques, mais peut être utilisée pour de nombreuses autres applications nécessitant une alimentation en liquide sous pression à partir d'un réservoir.

Le brevet français déposé sous le N° FR 98 06 431 par l'auteur de la présente demande décrit une machine à café comportant une motopompe associée à un pressostat monté sur le circuit d'alimentation et permettant non seulement de contrôler le système d'alimentation en eau, mais également de retirer le réservoir pour le remplir grâce au fait que ledit pressostat est constitué de deux éléments accouplables fixés l'un sur le châssis de la machine et l'autre à la base du réservoir, chacun de ces deux éléments s'obturant automatiquement lorsqu'ils sont séparés.

L'élément fixe est raccordé à la motopompe et est équipé d'une membrane souple agissant sur un contact électrique en fonction des variations de pression engendrées par les modifications du niveau de l'eau dans le réservoir. Le liquide pénétrant dans cet élément aboutit à une chambre unique dans laquelle se trouvent la membrane souple et l'orifice de sortie vers la motopompe. Cette disposition entraîne dans certaines conditions un fonctionnement aberrant du contact électrique, en particulier lors de arrêts et mises en route de la motopompe.

Un débitmètre en soi, mais arrangé d'une manière différente, ressort du FR-A-2 428 827.

Le dispositif selon la présente invention a pour objet la réalisation d'une motopompe incorporant l'ensemble des dispositifs de contrôle du flux de liquide et raccordée à un pressostat d'alimentation particulièrement fiable.

Il est constitué d'une motopompe à écoulement axial interne, à moteur électromagnétique et piston libre creux, équipée d'un débitmètre et d'un limiteur de débit incorporés, et associée à un pressostat destiné à contrôler son alimentation et comportant des cheminements internes séparés pour le flux de liquide aboutissant à la motopompe et pour le raccordement à la chambre contenant une membrane souple actionnant un contact électrique de contrôle de l'alimentation de la motopompe.

Sur les dessins annexés, donnés à titre d'exemple non limitatif d'une des formes de réalisation de l'objet de l'invention :
la figure 1 est une coupe axiale de la pompe à eau à débitmètre incorporé,
la figure 2 est une coupe transversale suivant les flèches F1 de la figure 1,
la figure 3 est une vue agrandie de face de la roue à palettes du débitmètre,
la figure 4 est une coupe axiale suivant les flèches F2 de la figure 3,
les figures 5 et 6 sont des coupes axiales des deux éléments séparés du pressostat
et la figure 7 montre dans les mêmes condition, à une échelle différente, ces deux éléments assemblés.

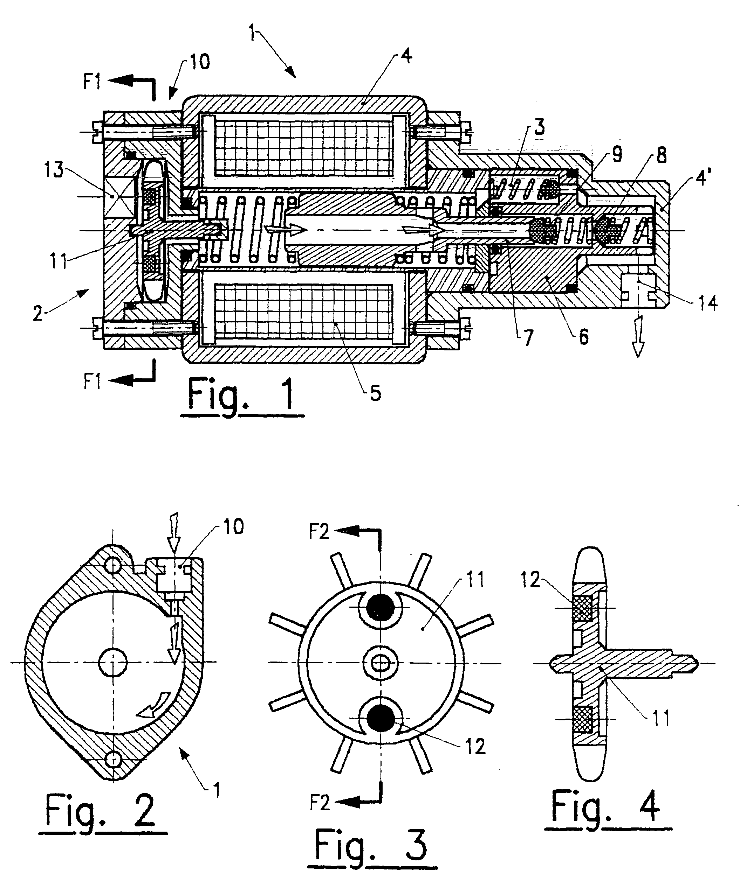

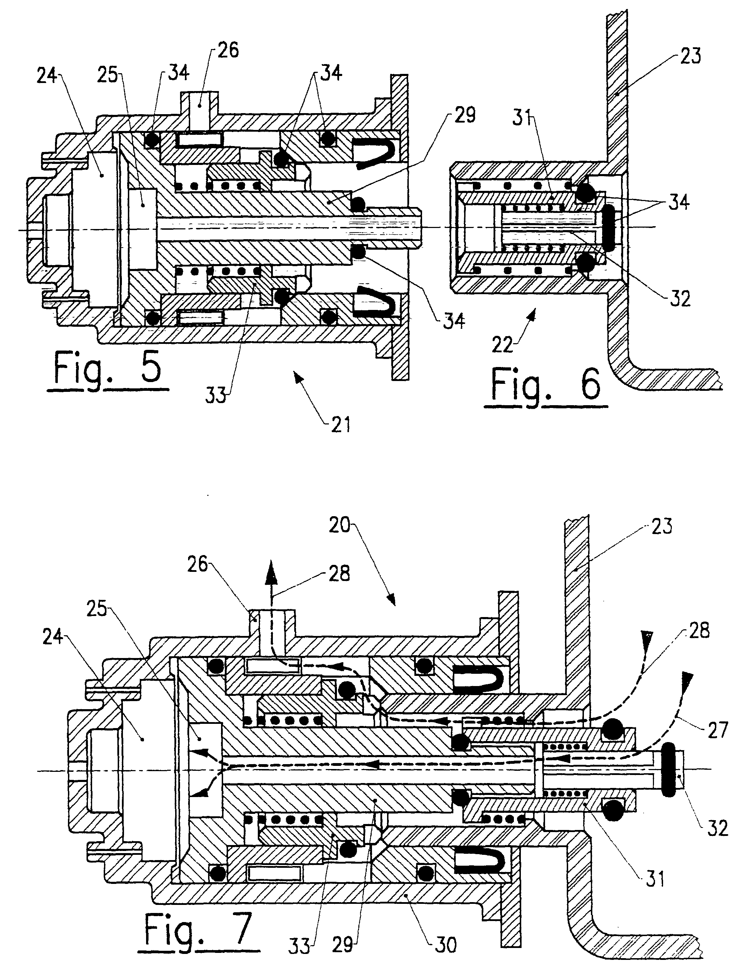

Le dispositif, figures 1 à 4, est constitué d'une motopompe 1 d'alimentation en eau consistant en un ensemble monobloc comportant un débitmètre 2 et un limiteur de pression 3 intégrés. Elle est de préférence du type à piston libre creux à moteur électromagnétique, mais peut aussi bien être de type à piston commandé entraîné par un moteur rotatif. Dans le premier cas, elle est avantageusement constituée d'un corps principal 4, renfermant la bobine 5 du moteur électromagnétique, l'une de ses extrémités contenant le bloc cylindre 6 dans lequel se meut le piston 7, et comportant des clapets anti-retour 8 et 9.

Le débitmètre 2, situé dans un bloc fermant le corps principal 4 du côté opposé du bloc cylindre 6, directement après l'arrivée d'eau 10 (figure 2), est formé d'une roue folle 11 à palettes et comporte un ou plusieurs aimants permanents 12 dont le passage est détecté par un détecteur électromagnétique 13, ayant pour double fonction de permettre d'arrêter la motopompe une fois la quantité d'eau désirée obtenue, et de signaler un éventuel défaut d'arrivée d'eau.

Le limiteur de pression 3 est constitué d'un perçage ménagé dans le bloc cylindre 6 contenant un clapet à ressort taré mettant en communication la sortie d'eau 14 avec la base du piston 7, de manière à ce que l'eau soit recyclée, sans entraîner le débitmètre 2 en cas de contre-pression à ladite sortie d'eau.

La disposition de l'entrée d'eau 10 et du débitmètre 2 à l'opposé de la sortie d'eau 14 entraîne un passage de l'eau à travers la partie motrice de la pompe, suivant l'axe de cette dernière, ce qui permet d'avoir un flux direct améliorant sensiblement le fonctionnement et la fiabilité de la pompe comme les essais l'ont démontré.

La motopompe 1 sera avantageusement associée à un pressostat 20 monté sur le circuit d'alimentation en liquide (figures 5 à 7).

Ce pressostat sera constitué d'un élément fixe 21, solidaire de la motopompe 1 ou du châssis portant cette dernière, et d'un embout 22 monté à la base du réservoir 23 et communiquant avec lui. Ces deux éléments constituant un raccord rapide pouvant être désaccouplé de manière à rendre ledit réservoir amovible sans outillage.

L'élément fixe 21 comporte un contacteur électrique 24 formé de deux électrodes et d'une membrane souple portant une plaque conductrice normalement éloignée de ces électrodes par un dispositif élastique et établissant le contact entre elles lorsque le poids du liquide présent dans le réservoir 23 repousse la membrane souple, la diminution de pression causée par la baisse de niveau dans le réservoir ayant l'effet contraire en écartant la membrane et la plaque conductrice des électrodes, ce qui coupe le contact. Ce dispositif constitue un moyen très fiable de pilotage des automatismes d'alimentation de la machine.

Afin d'éviter les répercussions sur la membrane du contacteur 24 des variations de pression entraînées par les mises en route et arrêts de la motopompe 1, le flux de liquide pénétrant dans le pressostat 20 est divisé en deux parties dirigées respectivement vers la chambre 25 contenant la membrane souple du contacteur 24 et vers l'orifice de sortie 26 du pressostat. Ceci est obtenu grâce à deux cheminements : d'une part un cheminement central 27 aboutissant à la chambre 25 et, d'autre part, un cheminement périphérique 28 aboutissant à l'orifice de sortie 26. Ces deux cheminements sont séparés par une pièce creuse 29 disposée dans le corps 30 de l'élément fixe 21 et prolongée par une douille 31 située dans l'embout 22.

La douille (31) est mobile axialement et associée à un ressort de façon à obturer le cheminement périphérique 28 lors de la séparation de l'élément fixe 21 et de l'embout 22, le cheminement central 27 étant obturé par un clapet 32 également mu par un deuxième ressort, et coulissant dans la douille 31.

L'élément fixe 21 est en outre pourvu d'un obturateur cylindrique 33 destiné à isoler le circuit de liquide communiquant avec la motopompe 1 de façon à empêcher le liquide restant dans cette dernière de s'écouler à l'extérieur, cet obturateur coulissant à l'extérieur de la pièce creuse 29 et étant actionné par un troisième ressort.

L'étanchéité de l'ensemble est assuré de manière connue par une série de joints toriques 34 reposant sur des sièges prévus à cet effet.

Le positionnement des divers éléments constitutifs donne à l'objet de l'invention un maximum d'effets utiles qui n'avaient pas été, à ce jour, obtenus par des dispositifs similaires.

## Revendications

1. Motopompe à écoulement axial traversant à débitmètre incorporé, destinée en particulier à équiper une machine à café automatique,
**caractérisée par le fait qu'**elle est du type à piston libre creux à moteur électromagnétique et qu'elle est constituée d'un corps principal (4) renfermant la bobine (5) du moteur électromagnétique, et dont une extrémité contient le bloc cylindre (6) dans lequel se meut le piston (7) et comporte des clapets anti-retour (8 et 9), le débitmètre (2), situé dans un bloc fermant le corps principal (4) du côté opposé à la sortie d'eau (14), directement après l'arrivée d'eau (10), étant formé d'une roue folle (11) à palettes comportant un ou plusieurs aimants permanents (12) dont le passage est détecté par un détecteur électromagnétique (13), et le limiteur de pression (3) étant constitué d'un perçage ménagé dans le bloc cylindre (6) contenant un clapet à ressort taré mettant en communication la sortie d'eau (14) avec la base du piston (7), de manière à ce que l'eau soit recyclée, sans entraîner le débitmètre (2) en cas de contre-pression à ladite sortie d'eau.

2. Motopompe selon la revendication 1, se caractérisant par le fait qu'elle est associée à un pressostat (20) monté sur le circuit d'alimentation et dans lequel le flux de liquide est divisé en deux parties dirigées respectivement vers une chambre (25) contenant une membrane souple actionnant un contacteur électrique (24) de pilotage des automatismes d'alimentation en liquide, et vers l'orifice de sortie (26) du pressostat communiquant avec la motopompe (1), la partie du flux aboutissant à la chambre (25) suivant un cheminement central (27), et celle aboutissant à l'orifice de sortie (26) suivant un cheminement périphérique (28).

3. Motopompe selon la revendication 2, se caractérisant par le fait que le pressostat (20) est constitué d'un élément fixe (21), solidaire de la motopompe (1) ou du châssis portant cette dernière, et d'un embout (22) monté à la base du réservoir (23) alimentant ladite motopompe et communiquant avec lui, ces deux éléments constituant un raccord rapide pouvant être désaccouplé de manière à rendre ledit réservoir amovible sans outillage.

4. Motopompe selon l'une quelconque des revendications 2 et 3, se caractérisant par le fait que les deux cheminements (27, 28) sont séparés par une pièce creuse (29) disposée dans le corps (30) de l'élément fixe (21) et prolongée par une douille (31) située dans l'embout (22), la douille (31) étant mobile axialement et associée à un ressort de façon à obturer le cheminement périphérique (28) lors de la séparation de l'élément fixe (21) et de l'embout (22), le cheminement central (27) étant obturé par un clapet (32) mu par un deuxième ressort, et coulissant dans la douille (31), l'élément fixe (21) comportant en outre un obturateur cylindrique (33) coulissant à l'extérieur de la pièce creuse (29), actionné par un troisième ressort et agencé de manière à isoler le circuit de liquide communiquant avec la motopompe (1) de façon à empêcher le liquide restant dans cette dernière de s'écouler à l'extérieur.

## Patentansprüche

1. Axial durchströmte Elektropumpe mit eingebautem Durchflussmesser, geeignet insbesondere für eine automatische Kaffeemaschine, **gekennzeichnet dadurch, dass** sie
- einen frei fliegenden, hohlen, von einem Elektromotor angetriebenen Kolben besitzt,
- aus einem Hauptkörper (4) besteht,
in dem die Spule (5) des Elektromotors angeordnet ist und dessen eines Ende den Rückschlagklappen (8 und 9) besitzenden Zylinderblock (6) enthält, in dem sich der Kolben (7) bewegt,
- einen Durchflussmesser (2) aufweist,
der in einer den Hauptkörper (4) auf der dem Wasseraustritt (14) gegenüberliegenden Seite verschließenden Einheit, direkt nach dem Wassereintritt (10) angeordnet ist und aus einem frei drehendem, mit Schiebern versehenen Rad (11) mit einem oder mehreren Dauermagneten (12) besteht, deren Vorbeilaufen an einem elektromagnetischen Detektor (13) von diesem erkannt wird, und
- einen Druckbegrenzer (3) besitzt,
der aus einer in den Zylinderblock (6) eingebrachten Bohrung besteht, die ein kalibriertes Federventil enthält, das den Weg zwischen dem Wasseraustritt (14) und der Basis des Kolbens (7) freigibt, so dass das Wasser bei einem Gegendruck an dem genannten Wasseraustritt in geschlossenem Kreislauf umlaufen kann, ohne den Durchflussmesser (2) anzutreiben.

2. Elektropumpe gemäß Anspruch 1, **gekennzeichnet dadurch, dass** sie mit einem Druckschalter (20) zusammen wirkt, der in die Zuleitung montiert ist und in dem der Flüssigkeitsstrom in zwei Ströme geteilt wird, von denen einer in einem mittleren Kanal (27) in eine Kammer (25) mit einer Membran, die einen elektrischen Schaltkontakt (24) betätigt, geleitet wird, um die automatische Flüssigkeitsversorgung zu steuern, und der zweite durch einen auf dem Umfang angeordneten Kanal (28) zum Ausgang (26) des Druckschalters geleitet wird, der mit der Pumpe (1) in Verbindung steht.

3. Elektropumpe gemäß Anspruch 2, **gekennzeichnet dadurch, dass** der Druckschalter (20) aus einem mit der Pumpe (1) oder dem sie tragenden Chassis fest verbundenen, nicht beweglichen Elements (21) besteht sowie einem Ansatz (22), der im unteren Bereich des die Pumpe beliefernden und mit dieser in Verbindung stehenden Behälters (23) montiert ist, wobei diese beiden Elemente einen Schnellverschluss bilden, der geöffnet werden kann, so dass der genannte Behälter ohne Werkzeug abnehmbar ist.

4. Elektropumpe gemäß einem der Ansprüche 2 oder 3, **gekennzeichnet dadurch, dass** die beiden Kanäle (27 und 28) durch ein im Körper (30) des unbeweglichen Elements (21) vorhandenes Hohlteil (29) getrennt sind, das durch eine Hülse (31) im Ansatz (22) verlängert wird, wobei die Hülse (31) in axialer Richtung beweglich ist und mit einer Feder zusammen wirkt, die, wenn das unbewegliche Element (21) und der Ansatz (22) voneinander getrennt werden, den auf dem Umfang angeordneten Kanal (28) verschließt, und wobei der mittlere Kanal (27) durch ein von einer zweiten Feder betätigtes Ventil (32) verschlossen wird, das in der Hülse (31) gleitet, und bei dem das unbewegliche Element (21) außerdem ein zylindrisches Verschlussstück (33) besitzt, das außen am Hohlteil (29) gleitet und von einer dritten Feder betätigt wird, so dass die Flüssigkeitsleitung zur Pumpe (1) gesperrt und die in der Pumpe verbleibende Flüssigkeit am Auslaufen gehindert wird.

## Claims

1. Axial through flow motor pump with an incorporated flowmeter, especially adapted to equip an automatic coffee machine, but which can be used for numerous other applications requiring pressurized liquid supply from a reservoir,
**characterized in that** it is of the type having a hollow free piston with an electromagnetic motor, and **in that** it is constituted of a main body (4), machined in a single piece made of plastic, one of its ends forming the coil (5) of the electromagnetic motor, the other end containing the cylinder block (6) in which the piston (7) moves, and comprising non-return valves (8 and 9), the flow meter (2), located in a block closing the main body (4) on the side opposite the water outlet (14), immediately after the water inlet (10), being formed of a free bucket wheel (11) comprising one or several permanent magnets (12) whose passage is detected by an electromagnetic detector (13), and the pressure limiting device (3) being constituted of a bore provided in the cylinder block (6) containing a calibrated spring-loaded valve connecting the water outlet (14) to the base of the piston (7), such that water is recycled, without driving the flow meter (2) in the case of back pressure at said water outlet.

2. Motor pump according to claim 1, **characterized in that** it is associated with a pressure controller (20) mounted on the supply circuit and in which the flow of the liquid is divided into two portions directed toward a chamber (25) containing a flexible membrane actuating an electric contact (24) for controlling the automatic liquid supply systems, and toward the outlet orifice (26) of the pressure controller communicating with the motor pump (1), respectively, the portion of flow converging to the chamber (25) along a central passage (27), and that converging to the outlet orifice (26) along a peripheral passage (28).

3. Motor pump according to claim 2, **characterized in that** the pressure controller (20) is constituted of a fixed element (21), affixed to the motor pump (1) or to the frame carrying the latter, and of an end piece (22) mounted at the base of the reservoir (23) supplying said motor pump and communicating with it. these two elements constituting a quick connection that can be separated so as to render said reservoir detachable without any tool.

4. Motor pump according to any of claims 2 and 3, **characterized in that** the two passages (27, 28) are separated by a hollow piece (29) arranged in the body (30) of the fixed element (21) and extended by a bush (31) located in the end piece (22), the bush (31) being axially movable and associated with a spring so as to close the peripheral passage (28) during the separation of the fixed element (21) and of the end piece (22), the central passage (27) being closed by a valve (32) which is driven by a second spring, and sliding in the bush (31), the feed element (21) further comprising a cylindrical shutter (33) sliding outside the hollow piece (29), actuated by a third spring and arranged so as to isolate the liquid circuit communicating with the motor pump (I) so as to prevent the liquid remaining in the latter from flowing outside.
